# EUROPEAN PATENT APPLICATION

(11) **EP 4 451 612 A1**
(43) Date of publication of application: **23.10.2024**
(21) Application number: 23168875.5
(22) Date of filing: 20.04.2023
(51) Int. Cl.: H04L 9/40

(54) **NETWORK HEALTH SCORING**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

The present disclosure provides methods of responding to a malware infection, one method comprising: receiving a graph representing a computer network infected with malware, wherein nodes of the graph represent devices of the computer network and edges of the graph represent connections between the devices; identifying a plurality of actions for responding to the malware; for each action of the plurality of actions: generating an updated graph by simulating the action and subsequent propagation of the malware in the computer network; and determining a health score for the computer network based on the updated graph, wherein calculating the health score comprises determining a contribution value for each node of the updated graph; identifying and selecting the action of the plurality of actions in dependence of the health score; and performing the identified action on the computer network.

## Description

### Technical Field

Embodiments of the present invention described herein relate to methods of scoring the health of a communications network to help detect infection of network entities by malware, viruses, and the like, and to help assess the associated impact of mitigating action on an infected communications network.

### Background to the Invention

When faced with a malware outbreak, it can be difficult to quantify the state of a network at the different stages of an infection. It is important to be able to identify how "healthy" or "unhealthy" a network state is, as this allows a system administrator to understand the weak points of the network security, and how a particular outbreak might have started or progressed. In this respect, a network state is a topological model that specifies the current state of intrusion/infection across a network. Further, a topological model may be a graph model demonstrating how devices on a network are connected, and is likely to have attributes on device properties (operating system, firewall rules, services, ports, interfaces, etc.).

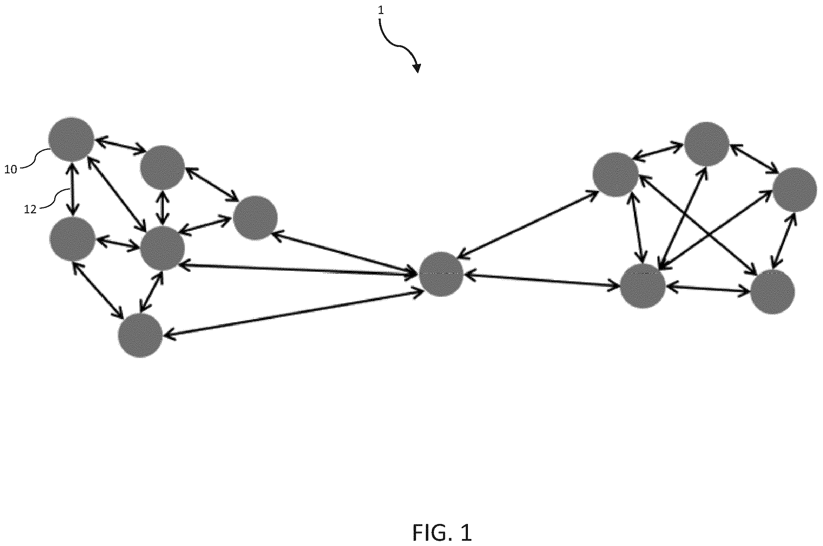

Computer networks are often represented through graphs as in Figure 1. In these graphs, the various devices 10 that make up the network 1 (e.g., servers, host machines, routers, switches, sensors, etc) make up the nodes 10 of the graph. A node in a network graph represents a device within the network, this may include servers, host machines, routers, cameras, etc. The links 12 between the various nodes denote possible connections between devices - i.e., if there is a link between two nodes, they are able to communicate, for example, through a Secure Shell (SSH) connection.

The importance of any one node on a network varies between all nodes, potentially quite considerably. From a basic point of view, nodes with higher centrality values - i.e. nodes with a higher number of links - are more important to the health of a network. All else being equal, it is straightforward to assume that a node with a single connection is less impactful to the network when compared to a node with multiple connections throughout the network.

When looking at this from a malware outbreak context, an infection of the node with a single connection likely poses less risk to the overall network. However, this is not necessarily always the case. A multitude of factors may influence how important any particular node is to the overall network, such as what type of device it is, what possible vulnerabilities might exist within it, how it is able to communicate with other devices, etc. The number of different factors influencing the importance of nodes varies significantly, based on the type of network we are dealing with and the amount of information we have available. Ideally, we would be able to adjust any particular method for calculating network health based on the specific use case in question.

### Summary of the Disclosure

The present disclosure addresses the above, by providing methods/algorithms which are used to calculate the contribution values of all nodes or devices in a computer network and then utilising said contribution values to calculate an overall network health score of the computer network. The overall network health score will take into account both healthy nodes and nodes that are currently infected by a malware. Healthy nodes will positively affect the overall network health score of the computer network and infected nodes will negatively affect the overall network health score. The ability to quantify the health of the network at any point allows one to understand the impact that different mitigations had on the outbreak of the malware, and thus allow for the proper selection of mitigating actions. Moreover, when paired with a malware simulation engine, the ability to calculate network health allows us to determine the better of two actions to take at any one point, resulting in the ability to better defend against a malware attack.

In view of the above, the present disclosure further relates to a method or algorithm wherein the calculation of the contribution values of all nodes within the computer network and the subsequent overall network health score are used to test mitigating actions on a model of the computer network. This allows the user to see the possible estimated affect of the mitigating action, or plurality of mitigating actions, on the overall network health score of the computer network. In this regard, the method or algorithm will allow the user to test a plurality of different mitigating actions and store the resulting overall network health scores. The user can then identify and select which mitigating action they wish to apply to the computer network in dependence on the stored estimated affect on the overall network health score.

Advantageously, this method enables the overall network health of the computer system to be quantified and subsequently allows mitigating actions to be trialled in order to see their quantified affect on the overall network health score. This allows the user to see how malware could spread through a computer network and cause widespread infection. By being able to visualise and quantify this effect the user has a greater ability to prevent the spread of infection, reduce the likelihood of highly important and central nodes becoming infected and improve or maintain the overall network health of the computer network. Further, this provides the advantage of a more robust, reliable, and effective computer network and ensures that nodes/devices and their associated communication links can continue to be operational for a greater period of time. Moreover, it allows the user to develop a mitigating action strategy that can be used to protect specific nodes or devices and can even be used to highlight weak points within the computer network or nodes/device with high susceptibility to becoming infected.

A first aspect of the present disclosure, relates to a computer-implemented method of responding to a malware infection, the method comprising, but not limited to: receiving a graph representing a computer network infected with malware, wherein nodes of the graph represent devices of the computer network and edges of the graph represent connections between the devices; identifying a plurality of actions for responding to the malware; for each action of the plurality of actions: generating an updated graph by simulating the action and subsequent propagation of the malware in the computer network; and determining a health score for the computer network based on the updated graph, wherein calculating the health score comprises determining a contribution value for each node of the updated graph; identifying and selecting the action of the plurality of actions in dependence on the health score; and performing the identified action on the computer network.

In some aspects, the selected action of the plurality of actions may be the action with the greatest health score. The plurality of actions may include, but is not limited to, one or more of: disconnecting the node or a plurality of nodes from the computer network; quarantining the node or a plurality of nodes from the computer network; blocking an open port or a plurality of open ports of the node; blocking a user access to the node; and querying the node for further information indicative of the node's current health.

In some aspects, determining the contribution value for each node may comprise multiplying a weighted sum by an importance factor associated with the each node. Further, the importance factor of the each node may be influenced by, but not limited to, one or more of: a usage level of a service or software associated with the amount of users that access the service or software of the each node; a specificity level associated with how many nodes of the computer network have the service or software of the each node; a total user level associated with the amount of users that use the each node; a device type of the each node; a privileges level associated with the amount of security privileges the node has; and a seniority level associated with the seniority of the user within the company of the each node.

In some aspects, determining the contribution value for each node may comprise determining the weighted sum including, but not limited to, one or more of: a centrality value of the each node; a sum of importance factors associated with neighbouring nodes of the each node; and a susceptibility to malware infection of the each node. Further, determining the contribution value for each node comprises determining the weighted sum including, but not limited to, one or more of an open port value associated with the amount of open ports of the each node; a services value associated with the amount of active services of the each node; a user access value associated with the amount of users that have access of the each node; and a traffic value associated with the volume of network traffic of the each node.

In some aspects, each step in the determining the weighted sum may be assigned a weighting value to increase or decrease a steps effect on the each nodes contribution value. The weighted sum may be multiplied by -1 if the each node is infected with the malware. In this case, an infected node may have a negative contribution value and a healthy node may have a positive contribution node.

In some aspects, the method may further comprise: sending an alert signal if the health score for the computer network is below a threshold value. The threshold value may be defined by the user.

In some aspects, determining a health score for the computer network may comprise normalising the health score relative to a maximum health score associated with an uninfected computer network having identical network topology to the infected computer network. The health score may be further normalised relative to a minimum health score associated with a computer network having identical network topology to the infected computer network in which every device is infected.

A second aspect of the present disclosure, computer-implemented method of modelling a malware infection, the method comprising, but not limited to: receiving a graph representing a computer network infected with malware, wherein nodes of the graph represent devices of the computer network and edges of the graph represent connections between the devices; identifying one or more actions for responding to the malware; for each action of the plurality of actions: generating an updated graph by simulating the action and subsequent propagation of the malware in the computer network; and determining a health score for the computer network based on the updated graph, wherein calculating the health score comprises determining a contribution value for each node of the updated graph.

In some aspects, the health score for the computer network may be stored for benchmarking of the simulated computer network health against measurements of actual computer network health.

In some aspects, the health score for the computer network may be used to assess the performance of a user by relating each action to the corresponding health score of the computer network.

In some aspects, the updated graph may be used to forecast the propagation of malware infection through the computer network.

A further aspect of the present disclosure, relates to a computer system for implementing a method for responding to a malware infection, the system comprising, but not limited to: one or more processor units; and a computer readable storage medium storing one or more computer programs such that when performed by the one or more processor units cause the computer system to operate in accordance with the associated method(s).

### Brief Description of the Drawings

Embodiments of the invention will now be further described by way of example only and with reference to the accompanying drawings.
Figure 1 is an example graph of a computer communication network.
Figures 2a and 2b are example graphs of computer communication networks including infected nodes.
Figure 3 is a flow diagram showing the implementation for calculating a node's contribution value according to a first embodiment of the present invention.
Figure 4 is a graph of computer communication network highlighting different individual node contribution values according to an embodiment of the present invention.
Figure 5 is a flow diagram of calculating and storing the network health scores after the simulation of different mitigating actions on the computer network according to a second embodiment of the present invention.
Figure 6 is a block diagram of a computer system for use with the method according to an embodiment of the present invention.

### Description of the Embodiments

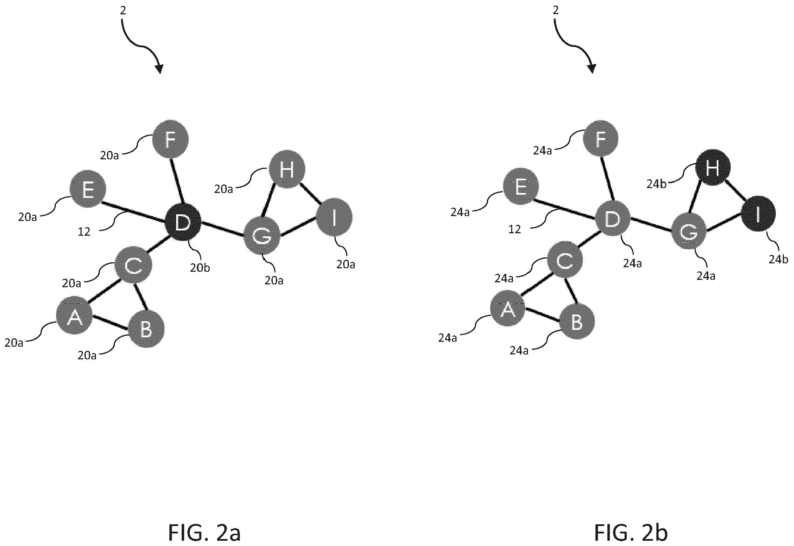

Determining the health of a network is a complicated process that changes depending on the type of network we are dealing with and the needs of the user. Compare the two different states of the same network topology 2 given in Figures 2a and 2b, wherein 20a/24a denote healthy devices or nodes and 20b/24b denote unhealthy or infected devices or nodes connected via communication channels 12.

The network topology 2 in Figure 2a includes a single infected node 20b, but it is a highly central one. The network topology 2 in Figure 2b includes two infected nodes 24b, but these are located on the edges of the network. The choice between which network state is preferable from a security point of view is a difficult one, and one that will depend on the needs of the user and any additional information about the network (such as node attributes).

In order to quantify the health of a network, we propose a modular approach, which can be tailored to the specific needs of any network. The proposed method starts by calculating for each node in the network, a "contribution value", corresponding to how "important" each node is to the overall health of the network. The contribution values of each node in the network are then added together to get an overall network health score. This score can be given as an absolute value, or as a percentage between 0% and 100%, by beforehand determining the maximum and minimum possible network health scores.

The algorithm for calculating individual node's contribution values is a modular one. Below, we give a possible sequence of steps of this algorithm, exemplifying how it is currently implemented in a malware detection tool with simulation and response capabilities:
1. Each node in the network is initialised with an "importance factor" of 1, or a value given by the user. This "importance factor" allows the user of the system to specifically highlight how important a node is to their network, and is used in later steps.
2. Calculate the centrality value of the node and add this to a sum tally.
3. Sum the "importance factors" of the node's neighbours and add this to a sum tally.
4. If the node is immune to the malware, add 1 to a sum tally.
5. Multiply the current sum tally for the node by the node's "importance factor".
6. If the node is infected, negate the value of the sum tally.

The sum tally at the end of the process is the contribution value of the node. Note that, of the 6 steps given in the above example of an implementation, only two are specifically required (steps 2 and 6). All other steps are optional and can be introduced as needed in other network contexts. Additional steps can also be implemented as necessary, for example, including a step that adds to the sum tally the number of different services running on that node.

In the present implementation, each of the steps highlighted above is also supplemented with a weight ratio. The value calculated at each step is multiplied by a weight value, used to specify how important that step is to the calculation of the final importance value.

The inclusion of any optional step is of particular importance for comparing different actions. For each action that can be made on a network, it is important that the impact of that action can be captured at at least one of the steps of the process. For example, if one of the possible actions that can be taken is to disable specific ports on devices, then the importance value calculation must take this into account by, for example, including an additional step that adds to the sum tally the number of open ports on the device. In the current implementation one of the possible actions is to "patch" a node, which makes the node no longer susceptible to being infected by the malware. The need to account for this possible action is the reason for step #4 above. A further example may relate to the amount of network traffic that a node experiences and thus a step to take into account a traffic value may further improve the robustness of the calculation of the contribution value of said node.

The final overall network health score is then simply the sum of all of the node's importance values. In the most basic scenario, this network health score is given as an absolute value. This absolute value can be used to compare different states of the same network - to compare which state is "better" - but on its own is of little significance to an analyst. We can better contextualise this absolute network health score by converting into a percentage between 0% and 100%, where 0% is the worst possible network health, and 100% is the best possible network health. For this, we must make the assumption that the original network topology is ultimately the desired one. Not doing so could mean that certain actions would continuously increase the health score of the network, for example, by continuously adding new devices to the network.

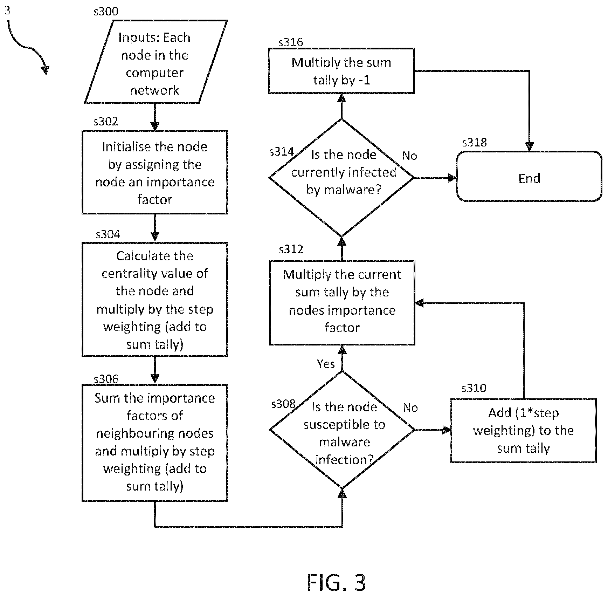

Figure 3 shows a flow diagram 3 of the aforementioned method for quantifying a contribution value of a node or device within the computer network in accordance with a first embodiment of the present disclosure. The method begins at s300 where the input parameters may be defined; these inputs are the plurality of nodes or devices in the computer network as shown in Figure 1 or 2. The method would be performed individually on all nodes or devices within the computer network. Next, at s302, each of these devices or nodes within the computer network are assigned an importance factor in order to initialise each node or device within the algorithm. The nodes or devices may be initialised by simply applying a default importance factor value of 1 or they could be provided a specific importance factor value based on the perceived importance of the node by the user. The specific importance factor values could be influenced by, but not limited to, the following: whether the node or device includes high usage services or software and the amount of application of said service or software; the total amount of users related to the node or device; device type i.e., servers may be more important than other devices; connection of the node or device to an individual i.e., a device associated with a senior member of a company may be assigned higher importance than that of a junior member; the amount of security privileges or software privileges a device has etc.

Next, at s304, the centrality value of the associated nodes or devices is calculated, wherein the centrality value of a node relates to the volume of communication links entering the node or device. Further, there are many different techniques of centrality calculations that relate to the different variations of centrality e.g., betweenness centrality, closeness centrality etc. As an example, if betweenness centrality was to be used, this would be calculated based on the number of shortest paths between two nodes. Moreover, in s304, the calculated centrality value of the node or device is multiplied by a weighting factor. The weighting factor equates to the perceived importance of the step within the method and is set by the user. So, for example, the user could adjust the weighting value in this case such that the centrality value of a node is of high importance on the overall outcome of the node's contribution to the computer network. Finally, the calculated centrality value (which has been multiplied by the weighting factor) is added to a sum tally.

Next, in s306, the importance factor values of the node's direct neighbours (nodes that have direct communication links with the node in question) may be added to the sum tally and then multiplied by a weighting factor relating to the importance of the step. Following s306, in s308, we may check whether the node is immune to the malware or in other words, has the node been patched against the malware and therefore is no susceptible to becoming infected. If the node is not susceptible to infection by the malware, then a value of 1 (multiplied by a weighting factor) may be added to the sum tally at s310. If the node is susceptible to infection by the malware, then the method will bypass s310 and go straight to s312. At s312, the current total sum tally is multiplied by the nodes importance factor as calculated in s302.

Finally, in s314, the algorithm will decide whether the node is currently infected. If the node is perceived to currently be infected, then the algorithm will proceed to s316 where the total sum tally will be inverted to give the overall contribution value of the node. If at s314 the node is considered to be healthy and operating normally then the overall contribution value will be the positive total sum tally. The algorithm will then end at s318. As mentioned previously, this method is repeated for all nodes within the computer network. Thus, the final overall network health score is then simply the sum of all of the node's importance values. Again, this absolute value can be used to compare different states of the same network - to compare which state is "better" - but on its own is of little significance. We can better contextualise this absolute network health score by converting into a percentage between 0% and 100%, where 0% is the worst possible network health, and 100% is the best possible network health.

With this in mind, the best possible network health score for any given network is the original network topology, where all of the nodes in the network are not susceptible to being infected. Similarly, the worst possible network health score for any given network is the original network topology, where all of the nodes in the network are infected. The best and worst possible network health scores are dependent on the steps we take to calculate individual node contribution scores. Therefore, this would vary based the different steps that are taken during the individual node contribution score calculation e.g., if one didn't consider whether a node is susceptible to being infected - then the maximum network health score would be the original network without any additional conditions.

By calculating the health score of a network in this manner, where each node has a contribution value, we are further able to identify which nodes or regions of the network contribute the most to the health of the network, as exemplified in the image below.

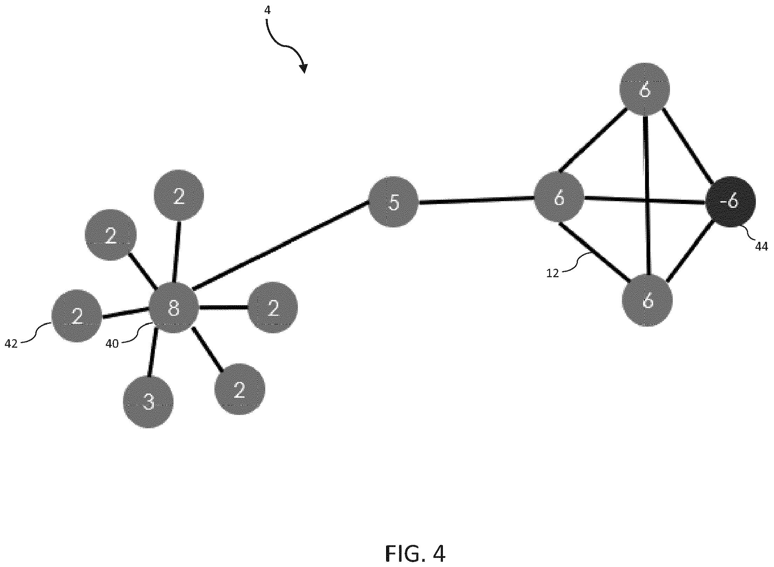

In the above example and in Figure 4, highly central nodes with larger "importance factor" values, for both themselves and their neighbours, contribute the most to the health of the network. If these nodes are not infected themselves, they contribute positively to the health of the network. In contrast, if these nodes are infected, they contribute negatively to the health of the network. One can think of this duality in the following manner: "A node which is important for the network when acting in a benign manner can have the same force of impact when acting maliciously".

This can be seen in Figure 4 which shows a graph of the computer network systems 4 including various nodes or devices 40, 42, 44 and their communication links or connections 12. The various nodes or devices 40, 42, 44 are assigned specific importance factor ratings (the importance factor ratings are highlighted by the numbers within the nodes) wherein higher importance nodes are assigned higher ratings, lower importance nodes are assigned lower ratings and infected or unhealthy nodes are assigned negative ratings. It can be seen that node 40 represents a very high importance node due to the centrality of the node and the amount of communication links it has as such the node is assigned the highest importance factor rating of any node in the computer network. Node 42 represents a low importance node that is on the periphery of the computer network and as such node 42 is assigned a low importance factor rating. Node 44 represents an infected or unhealthy node and as such is assigned a negative importance factor rating. It is worth noting that the magnitude of the negative importance factor rating signifies that node 44 is still a relatively high importance node despite its infected or unhealthy status.

The combination of this approach to calculating network health score with a malware simulation engine, yields two valuable outcomes when it comes to carrying out mitigative actions. Firstly, by highlighting the individual contribution values of the different nodes and regions of a graph, a simulation engine can reduce its search space of mitigation actions, by looking only at actions which protect the most important areas, or actions which target the infected nodes most significant to the success of the outbreak. This can significantly reduce computation time for the simulation engine, which is critical to the success of any defence software when dealing with live malware outbreaks.

Secondly, the ability to calculate network health scores after the simulation of different actions on the network means that the effects of different actions are directly comparable, allowing a defence system to suggest the most optimal actions to take when defending against a malware outbreak.

To summarise, the ability to quantify the contribution value of a node or device within a computer network and then subsequently quantify a network health score of the overall computer network has the following non-exhaustive list of benefits or advantages:
- It allows for benchmarking of the overall health of the computer network by giving a network health score that could be compared against in the future;
- It gives an accurate indication of an individual nodes or group of nodes contribution to the computer network relative to the parameters a user may consider of high importance;
- It allows analysis to be performed i.e., analysis of the performance of analyst or cyber security operator. This can be achieved as the network health score of the computer network may be known at time A which can be compared against the network health score at time B after the cyber security operator have performed maintenance or adaptations to the computer network. The change in network health score between time A and time B can be used to assess the performance of the analyst or cyber security operator as to whether the maintenance or adaptations to the computer network were beneficial;
- It allows the collection of network health score data across varying times, days and months in order to better understand how the system operates during different periods;
- It can be used as a training, assessment, or development tool whereby operators can learn about the spread of malware within a computer network and the effect that can have. Moreover, it will allow operators to better appreciate the significance of a nodes centrality, susceptibility to infection, number of operable service etc. to the importance or contribution of the node to the computer network;
- It can allow for forecasting to occur whereby the operates can regenerate the network health score to predict the propagation of the malware infection and give insight into the affect on the overall computer network should the infection be left to its own devices. Moreover, it will give further insight, for example, into the amount of time propagation of the malware infection through the system might take.

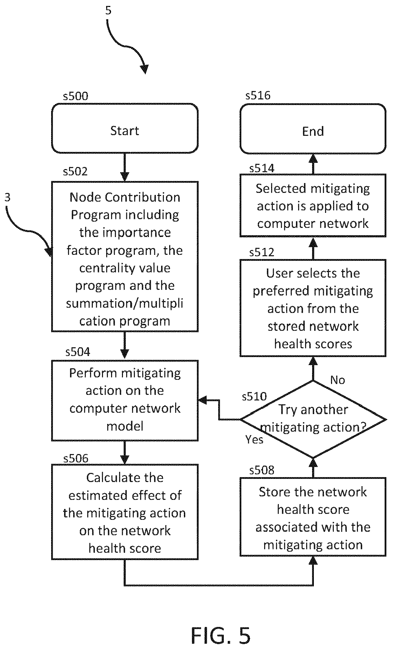

Figure 5 shows a flow diagram of the method or algorithm for calculating and storing the network health scores after the simulation of different mitigating actions on the computer network in accordance with a second embodiment of the present invention. The method or algorithm starts at s500 and in s502 the method 3 of Figure 3 is completed to compute the node contribution program to calculate the node contribution values of all nodes within the computer network. The method 3 uses an importance factor program, the centrality value program and the summation/multiplication program as was discussed in relation to Figure 3. Once all the nodes in the computer network have been assigned contribution values, the overall network health score is calculated and stored. The individual node contribution values and associated communication links are displayed in a graphical manner as in Figure 4, wherein nodes of the graph represent devices of the computer network and edges of the graph represent connections between the devices. Then the method progresses to s504 where a mitigating action is performed on the model of the computer network and an updated graph is generated. The mitigating action or the action on the network may be, but is not limited to, the following: remove a device or cluster of devices from the network; quarantine a device for a period of time; block ports/domains of the device or node; blocking user access to a device or specific services or software within said device etc. It is worth noting that any action could be implemented on an individual node or device or on a plurality of different nodes or devices at the same time. Once this has been performed the estimated overall network health score is recalculated using the regenerated computer network graph. This estimated overall network health score is compared to the original stored network health score in order to estimate the effect of the mitigating action on the network health score. In s508, the estimated overall network health score following the mitigating action is stored. Alternatively, the effect of the mitigating action on the network health score can be stored i.e., the difference between the original network health score and the estimated network health score following mitigating action. In s510, the method or algorithm will decide whether different mitigating actions need to be tested and if so, the method will return to s504 where method s504-508 will be repeated to store a further network health score or effect on network health score. Next, in s512, the user will be able to see the stored network health scores or effect on network health scores associated with each mitigating action. From here the user will be able to select the mitigating action that they wish to apply to the computer network in order to improve the network health score. The user may choose the mitigation action associated with the highest network health score or highest effect on the network health score. Alternatively, the user may use the network health scores as guidance when deciding which mitigating action to apply to the system, however, the user may take other factors into account such as cost, complexity etc. Once the user has selected the mitigating action they wish to apply to the computer network, the selected mitigating action will be applied in s514 before the method or algorithm ends in s516.

The steps as discussed in accordance with Figures 3 and 5 make up an importance factor program 704 (for evaluating the significance of nodes in the network and applying an importance factor accordingly), a centrality value program 706 (for assessing the amount of communication links a node or device has), an optimum network action program 710 (for selecting the users' optimum mitigating action) and a summation and multiplication program 708 (for computing the sum tally and the step weighting required in the methods relating to Figure 3 and 5).

To summarise, using the calculated contribution value of a node or device and the calculated network health score of the computer network to test and trial different actions on the computer network has the following non-exhaustive list of further benefits or advantages:
- It allows for evaluation of a plurality of different actions so the effect of said actions can be trialled and compared;
- It allows for the optimum mitigating action to be performed by being able to trial a plurality of actions and compare the effects each mitigating action has on the overall network health score. On the contrary, it allows for low impact mitigating actions to be automatically discarded;
- It gives analysts and cyber security operators more data regarding the health of the computer network such that they can make more informed decisions on actions to take.

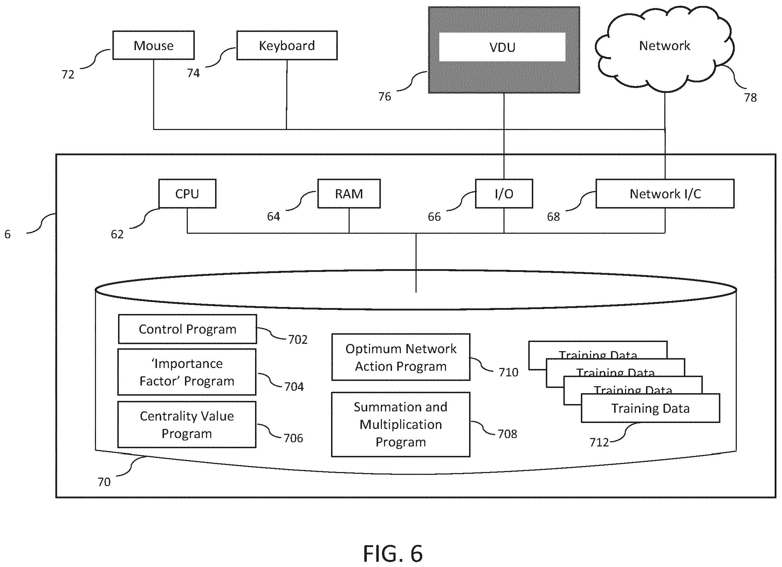

Figure 6 is a block diagram of a typical general purpose computer system 6 that can form the processing platform for the method of network health scoring and optimisation, as described, according to an embodiment of the present invention. The computer system 6 comprises a central processing unit (CPU) 62, random access memory (RAM) 64, and input/output ports (I/O) 66 into which data can be received and output therefrom as is well known in the art. Additionally included is a visual display unit (VDU) 76 for displaying necessary user data and outputs and network connection 78 which can communicate with other computer systems, nodes, or devices via the network I/C 68. Although it should be appreciated that many further appliances could be connected to the computer system 6 such as a mouse 72 and a keyboard 74 if necessary.

The computer system 6 also includes some non-volatile storage 70, such as a hard disk drive, solid-state drive, or NVMe drive. Stored on the non-volatile storage 70 is a number of executable computer programs together with data and data structures required for their operation or training. Overall control of the computer system 6 is undertaken through the execution of the control program 702 which executed programs relating to the general operation of the computer system 6 such as initialisation or shut-down etc. However, the non-volatile storage 70 also includes programs which when executed perform the specific requirements of the present invention as detailed above. These programs include but are not limited to an importance factor program 704 for evaluating the significance of nodes in the network and applying an importance factor accordingly, a centrality value program 706, the optimum network action program 710 and the summation and multiplication program 708. These relate to the methods/programs as discussed in relation to Figure 3. The other data contained in the non-volatile storage 70 is the training data 712 which would be required to train the associated programs. The computer system 6 may also include functionality for sending an alert signal via the network channel 78 and network I/C 68 to a user should the network health score be or fall below a threshold value indicating that the state of the computer network is unhealthy. The threshold value can be set by the user and thus the user can decide how secure the network needs to be in accordance with parameters they consider of importance for example having a very high threshold may be too expensive to maintain in practice and thus the user might choose a lower threshold value.

The computer-implemented system is applicable with a plethora of devices i.e., devices that are capable of processing large data files and efficient communication between nodes. The devices should be capable of at least receiving, transmitting, processing, analysing, and storing of data that is required for scoring the health of the network and then optimising said network. Therefore, devices that may be applicable for use in this system, but are not limited to, include:
- servers;
- host machines;
- routers;
- cameras;
- desktop computers;
- laptop computers;
- mobile telephones;
- tablet computers.

Various modifications whether by way of addition, deletion, or substitution of features may be made to above-described embodiment to provide further embodiments, any and all of which are intended to be encompassed by the appended claims.

## Claims

1. A computer-implemented method of responding to a malware infection, the method comprising:
receiving a graph representing a computer network infected with malware, wherein nodes of the graph represent devices of the computer network and edges of the graph represent connections between the devices;
identifying a plurality of actions for responding to the malware;
for each action of the plurality of actions:
generating an updated graph by simulating the action and subsequent propagation of the malware in the computer network;
determining a health score for the computer network based on the updated graph, wherein calculating the health score comprises determining a contribution value for each node of the updated graph;
identifying and selecting the action of the plurality of actions in dependence on the health score; and
performing the identified action on the computer network.

2. A method according to claim 1, wherein the selected action of the plurality of actions is the action with the greatest health score.

3. A method according to claim 1, wherein determining the contribution value for each node comprises multiplying a weighted sum by an importance factor associated with the each node.

4. A method according to claim 3, wherein the importance factor of the each node is influenced by one or more of:
a usage level of a service or software associated with the amount of users that access the service or software of the each node;
a specificity level associated with how many nodes of the computer network have the service or software of the each node;
a total user level associated with the amount of users that use the each node;
a device type of the each node;
a privileges level associated with the amount of security privileges the node has; and/or
a seniority level associated with the seniority of the user within the company of the each node.

5. A method according to claim 3, wherein determining the contribution value for each node comprises determining the weighted sum including one or more of:
a centrality value of the each node;
a sum of importance factors associated with neighbouring nodes of the each node;
a susceptibility to malware infection of the each node.
an open port value associated with the amount of open ports of the each node;
a services value associated with the amount of active services of the each node;
a user access value associated with the amount of users that have access of the each node; and/or
a traffic value associated with the volume of network traffic of the each node.

6. A method according to any of claims 3 to 5, wherein each step in the determining the weighted sum can be assigned a weighting value to increase or decrease a steps effect on the each nodes contribution value.

7. A method according to any of claims 3 to 6, wherein the weighted sum is multiplied by -1 if the each node is infected with the malware.

8. A method according to any preceding claim, wherein an infected node has a negative contribution value and a healthy node has a positive contribution node.

9. A method according to any preceding claim, the method further comprising:
sending an alert signal if the health score for the computer network is below a threshold value wherein the threshold value is defined by the user.

10. A method according to any preceding claim, wherein determining a health score for the computer network comprises normalising the health score relative to a maximum health score associated with an uninfected computer network having identical network topology to the infected computer network and normalising the health score relative to a minimum health score associated with a computer network having identical network topology to the infected computer network in which every device is infected.

11. A method according to any preceding claim, wherein the plurality of actions includes one or more of:
disconnecting the node or a plurality of nodes from the computer network;
quarantining the node or a plurality of nodes from the computer network;
blocking an open port or a plurality of open ports of the node;
blocking a user access to the node; and/or
querying the node for further information indicative of the node's current health.

12. A computer-implemented method of modelling a malware infection, the method comprising:
receiving a graph representing a computer network infected with malware, wherein nodes of the graph represent devices of the computer network and edges of the graph represent connections between the devices;
identifying one or more actions for responding to the malware;
for each action of the plurality of actions:
generating an updated graph by simulating the action and subsequent propagation of the malware in the computer network; and
determining a health score for the computer network based on the updated graph, wherein calculating the health score comprises determining a contribution value for each node of the updated graph.

13. The method of claim 12, wherein the health score for the computer network is used for one or more of the following:
benchmarking of the simulated computer network health against measurements of actual computer network health; and/or
assessing the performance of a user by relating each action to the corresponding health score of the computer network.

14. The method of claim 12, wherein the updated graph is used to forecast the propagation of malware infection through the computer network.

15. A computer system for implementing a method for responding to a malware infection, the system comprising:
one or more processor units; and
a computer readable storage medium storing one or more computer programs such that when performed by the one or more processor units cause the computer system to operate in accordance with the method of any of claims 1 to 14.
